# EUROPEAN PATENT SPECIFICATION

(11) **EP 4 176 003 B1**
(45) Date of publication and mention of the grant of the patent: **16.10.2024**
(21) Application number: 21739672.0
(22) Date of filing: 05.07.2021
(51) Int. Cl.: C08L 9/00, B60C 1/00, C08L 9/06, C08L 21/00

(54) **HIGHT-RIGIDITY RUBBER COMPOUND FOR PNEUMATIC TYRE PORTIONS**
HOCHSTEIFE KAUTSCHUKMISCHUNG FÜR LUFTREIFENTEILE
COMPOSÉ DE CAOUTCHOUC À RIGIDITÉ ÉLEVÉE POUR PARTIES DE PNEU

(30) Priority: 06.07.2020 IT 202000016285
(43) Date of publication of application: 10.05.2023
(73) Proprietor: Bridgestone Europe NV/SA, 1930 Zaventem (BE)
(72) Inventor: CHIEFFI, Gianpaolo, 00128 Roma (IT)
(74) Representative: Marchetti, Alessio
(86) International application number: PCT/EP2021/068524
(87) International publication number: WO 2022/008452

(56) References cited:
- EP-A1- 2 042 346
- EP-A1- 2 433 813
- EP-A1- 3 294 535
- EP-A1- 3 393 824
- EP-A1- 3 573 846
- EP-A1- 3 574 039
- US-A- 4 375 497
- US-A1- 2011 073 229

## Description

The present invention relates to a high-rigidity rubber compound for portions of a pneumatic tyre.

In particular, the present invention refers to a compound for a structural component of a pneumatic tyre, such as the TREAD UNDERLAYER, TREAD BASE, BEADFILLER, ABRASION GUM STRIP, RUN FLAT INSERT or SIDEWALL.

As is known, the need is strongly felt in the pneumatic tyre industry to provide compounds wherein the compositions thereof are such as to produce pneumatic tyre components that are capable of exhibiting ever lower hysteresis and, therefore, an ever lower rolling resistance. In this regard, those skilled in the art are implementing solutions that favor an ever greater dispersion of the filler within the compound, such as, for example, the use of functionalized polymers or functionalized silica.

Despite the fact that such solutions are able to guarantee the sought after low levels of hysteresis, they nevertheless have the disadvantage of resulting in worsening of the compound in terms of rigidity.

As is known to a person skilled in the art, compounds with low rigidity necessarily imply low performance in terms of handling.

The solutions for increasing the rigidity of the compounds usually involve an increase in the viscosity of the compound, with related problems in terms of ease of processing.

For example, as is known in the industry, the addition of silica to the compound, while triggering an increase in rigidity, also results in an increase in viscosity.

The need was therefore felt to find a solution that would allow for an increase in the rigidity of the compound without, as a result, triggering an increase in the viscosity thereof.

For some time now, the use of lignin has been known in the pneumatic tyre industry. Lignin is an organic substance that binds the cells and fibers that constitute wood and the lignified elements of plants. After cellulose, it is the most abundant renewable source of carbon on earth. EP 2 042 346 A1 teaches tires having a rubber tread of a lug and groove configuration wherein at last a portion of the surface of the grooves has a repellent property. The tread groove repellent property is for tires to be driven over wet roads. The tread groove repellent property is based on increased lubricity of a tire groove surface to promote a lower coefficient of friction and increased hydropobicity to promote repellency within the tread grooves for water and/or water containing substrates. These rubber compositions comprise natural rubber and a second rubber type selected from SBR, butadiene rubber, chlorobutyl rubber and EPDM and carbon black, PFTE short fibers and lignin.

Although it is not possible to define the precise structure of lignin as a chemical molecule, it is however possible to identify lignin as a polymer comprising the following three phenylpropane units: p-coumaryl alcohol; coniferyl alcohol (4-hydroxy-3-methoxycinnamyl alcohol); sinapyl alcohol (4-hydroxy-3,5-dimethoxycinnamyl alcohol). There are different types of lignin that are commercially available and that differ therebetween as a function of the different extraction process by which they were obtained from the different raw material used. The kraft process and the sulfonation process are two examples of processes dedicated to the extraction of lignin.

In particular, kraft lignin is a byproduct of the kraft process that is utilized to chemically extract cellulose from wood. This is obtained by means of precipitation, lowering the pH of spent liquor from the kraft process. Phenol, alcohol and carboxyl hydroxyls are the main identifiable functional groups within kraft lignin, while thiol groups are present to a lesser extent.

In contrast, the sulfonation process leads to lignin being obtained that is characterized by the presence of hydroxyls and high concentrations of sulfonic groups.

As it may immediately seem to a person skilled in the art, the use of lignin represents a significant advantage in terms of sustainability. In fact, lignin is a natural product that constitutes a byproduct of wood in the production of paper. In this respect, it should also be specified that the disposal of lignin is a limiting step within the paper production chain.

The inventor of the present invention has found that the addition of kraft lignin under particular conditions succeeds in satisfying the aforementioned requirement. In this way, it will be possible to recover the lost rigidity following a reduction in hysteresis, without having to sustain an increase in the viscosity of the compound.

The object of the present invention is a rubber compound for a pneumatic tyre portion comprising a cross-linkable unsaturated chain polymeric base, a reinforcing filler, processing oil and vulcanization agents; said reinforcing filler comprising silica; said compound **being characterized in that** it comprises kraft lignin in a quantity of between 2 and 30 phr; the ratio in phr between said reinforcing filler and said processing oil being greater than or equal to 3.

The term "cross-linkable unsaturated chain polymeric base" refers to any natural or synthetic non-cross-linked polymer capable of assuming all of the typical chemical-physical and mechanical characteristics of elastomers upon cross-linking (vulcanization) with sulfur-based systems.

The term "vulcanization agents" refers to those compounds, such as sulfur and the accelerant, which are able to trigger the cross-linking of the polymeric base.

Preferably, the reinforcing filler comprises silica.

Preferably, the quantity of kraft lignin ranges between 5 and 20 phr.

Preferably, the ratio in phr between the reinforcing filler and processing oil is greater than or equal to 10.

Preferably, the lignin is added to the compound during a first mixing step together with the reinforcing filler.

A further object of the present invention is a pneumatic tyre portion manufactured using the compound of the present invention.

Preferably, the pneumatic tyre portion is a structural component included in the group comprising the TREAD UNDERLAYER, TREAD BASE, BEADFILLER, ABRASION GUM STRIP or SIDEWALL.

A further object of the present invention is a pneumatic tyre comprising a portion manufactured using a rubber compound according to the present invention.

For a better understanding of the invention, the following examples are indicated for illustrative and non-limiting purposes.

### EXAMPLES

Three sets of experimental tests were performed.

In the first set of experimental tests, five compounds were prepared, of which one is a reference compound (Ref. 1), two are comparison compounds (Comp. 1 and Comp. 2) and two are compounds according to the invention (A and B). In particular, the comparison compounds (Comp. 1 and Comp. 2) were obtained by adding silica to the reference compound (Ref. 1), while the compounds according to the invention were obtained by adding kraft lignin to the reference compound (Ref. 1).

In particular, the compounds according to the invention (A and B) have a ratio in phr, between the reinforcing filler and the processing oil, according to the invention and, therefore, greater than or equal to 3.

The first set of experimental tests demonstrates that adding silica to the reference compound produces an increase in the rigidity of the compound simultaneously with an increase in the viscosity thereof, while adding kraft lignin to the reference compound (Ref. 1), if the ratio in phr between the reinforcing filler and the processing oil is according to the invention, produces an increase in the rigidity of the compound, without this resulting in an increase in the viscosity thereof.

In the second set of experimental tests, a second reference compound (Ref. 2) was prepared that was obtained by adding silica to the reference compound (Ref. 1) of Table I, and a compound of the invention (C) was prepared that was obtained by adding kraft lignin to the second reference compound (Ref. 2). In this second set of tests, the compounds have a ratio in phr between the reinforcing filler and the processing oil that is greater than that of the compound of the invention (A and B) of the first set of tests.

The second set of experimental tests demonstrates that the greater the ratio in phr between the reinforcing filler and the processing oil, the greater the effect will be of adding kraft lignin on the rigidity, without modifying the viscosity levels.

In the third set of experimental tests, two pairs of compounds were compared that differ in terms of the ratio between the reinforcing filler and the processing oil. The two compounds of each pair differ insofar as one (Ref. 3 and Ref. 4) is without lignin, while the other (D and E) was obtained with an additional 10 phr of kraft lignin.

The third set of experimental tests demonstrates that, surprisingly, if the ratio in phr between the reinforcing filler and the processing oil is less than that of the invention, the addition of kraft lignin does not have the desired effect in terms of rigidity.

### - preparation of the compounds -

### (1^{st} mixing step)

Before the start of the mixing, a mixer with tangential rotors and an internal volume of between 230 and 270 liters was filled with all of the ingredients of the respective compound with the exception of the vulcanization ingredients, thereby reaching a filling factor of between 66-72%.

The mixer was operated at a speed of between 40-60 revolutions/minute, and the mixture thus formed was discharged once a temperature of between 140-160°C had been reached.

### (2^{nd} mixing step)

The mixture obtained from the previous step was reworked in a mixer that was operated at a speed of 40-60 revolutions/minute and, thereafter, discharged once a temperature of 130-150°C had been reached.

### (final mixing step)

The vulcanization system was added to the mixture obtained from the previous step, reaching a filling factor of 63-67%.

The mixer was operated at a speed of between 20-40 revolutions/minute, and the mixture thus formed was discharged once a temperature of between 100-110°C had been reached.

Table I lists the compositions in phr of the five compounds in relation to the first set of experimental tests.

The results of the viscosity and rigidity tests, obtained for each compound are also present in Table I.

For the evaluation of the rigidity, the relative value of the elastic module E' (30°C) was measured by means of the test according to the ISO 4664 standard; the viscosity values were obtained according to the ASTM 1646 standard.

For a more immediate understanding of the advantages of the present invention, the rigidity and viscosity values were indexed to the values of the reference compound (Ref. 1).

**Table I**

| | Ref. 1 | Comp. 1 | Comp. 2 | A | B |
|---|---|---|---|---|---|
| SBR | 86 | | | | |
| BR | 14 | | | | |
| Silica | 81 | 91 | 101 | 81 | 81 |
| Silane (75) | 7.6 | 8.5 | 9.5 | 7.6 | 7.6 |
| Kraft lignin | - | - | - | 10 | 20 |
| Processing oil | 5.0 | | | | |
| Sulfur | 2.05 | | | | |
| DPG | 1.8 | | | | |
| MBTS | 1.3 | | | | |
| TBBS | 1.2 | | | | |
| Stearic acid | 1 | | | | |
| ZnO | 1.7 | | | | |
| Viscosity | 100 | 112 | 120 | 98 | 92 |
| Stiffness | 100 | 121 | 142 | 136 | 147 |

SBR is a polymeric base obtained by means of an emulsion polymerization process with an average molecular weight of between 800-1500x103 and 500-900x103, respectively, with a styrene content of between 20 and 45% and used with an oil content equal to 37.5 phr.

BR is a butadiene rubber with a 1,4-cis content of at least 40%.

The silica used is marketed under the name ULTRASIL VN3 by the DEGUSSA company.

The silane used is marketed under the name SI 75 by the DEGUSSA company.

The kraft lignin used in the examples is marketed under the trade name "Indulin AT" by the WestVaco company.

The processing oil used is octyl oleate or RAE.

DPG is the acronym for the compound diphenyl-guanidine used as a vulcanization accelerant.

MBTS is the acronym for mercaptobenzothiazole disulfide used as a vulcanization accelerant.

TBBS is the acronym for the compound N-tert-butyl-2-benzothiazole sulfenamide, which is used as a vulcanization accelerant.

It can clearly be deduced from the values listed in Table I how the addition of kraft lignin produces a significant increase in rigidity, without this resulting in an increase in viscosity. By contrast, the addition of silica, other than producing an increase in rigidity, also simultaneously produces an increase in viscosity. Furthermore, it emerges from Table I that, at an equal quantity in phr, the kraft lignin also produces an increase in rigidity that is greater than that produced by the silica.

Listed in Table II are the compositions in phr of the compounds of the second set of experimental tests and the related viscosity and rigidity test results, obtained according to the standards indicated above.

The viscosity and rigidity values were indexed to the reference compound (Ref. 2) without lignin.

**Table II**

| | Ref. 2 | \| C |
|---|---|---|
| SBR | 86 | |
| BR | 14 | |
| Silica | 96 | |
| Silane 75 | 9 | |
| Kraft lignin | -- | 1 10 |
| Processing oil | 5.0 | |
| Sulfur | 2.05 | |
| DPG | 1.8 | |
| MBTS | 1.3 | |
| TBBS | 1.2 | |
| Stearic acid | 1 | |
| ZnO | 1.7 | |
| Viscosity | 100 | 99 |
| Stiffness | 100 | 145 |

The nature of the ingredients of Table II is the same as those of Table I.

The values listed in Table II, if listed with those in relation to the compounds A and B of Table I, demonstrate how the larger ratio between the silica and the processing oil results in a greater increase in rigidity due to the addition of kraft lignin. In fact, with the same amount of kraft lignin added, it is possible to determine that compound C, wherein the ratio between the silica and the processing oil is 19.2, produces an increase in rigidity, in indexed form, from 100 to 145, while compound A, wherein the ratio between the silica and the processing oil is 16.2, produces an increase in rigidity, in indexed form, from 100 to 136.

Listed in Table III are the compositions in phr of two pairs of compounds which differ only by the quantity of processing oil and, as a result, by the ratio between the silica and the processing oil. Again in Table III, listed for each pair of compounds, are the viscosity and rigidity values, indexed to the compound, (Ref. 3 and Ref. 4) without lignin.

**Table III**

| | | | | |
|---|---|---|---|---|
| Silica/processing oil ratio | 2.9 | | 3.8 | |
| | Ref. 3 | D | Ref. 4 | E |
| SBR | 80 | | 80 | |
| BR | 20 | | 20 | |
| Silica | 117 | | 117 | |
| Silane (69) | 10.8 | | 10.8 | |
| Kraft lignin | 0 | 10 | 0 | 10 |
| Processing oil | 41 | | 31 | |
| Sulfur | 2.15 | | 2.15 | |
| DPG | 1.45 | | 1.45 | |
| MBTS | 0.75 | | 0.75 | |
| CBS | 1.7 | | 1.7 | |
| Stearic acid | 2 | | 2 | |
| ZnO | 2.5 | | 2.5 | |
| Viscosity | 100 | 102 | 100 | 100 |
| Stiffness | 100 | 106 | 100 | 131 |

The nature of the ingredients of Table III is the same as those of Table I.

It can be deduced from the rigidity values listed in Table III how, that if the ratio between the silica and the processing oil is less than that claimed, the effects of adding kraft lignin are not those that were sought. If fact, compound D compared to compound Ref. 3 does not show obvious improvements in terms of rigidity, despite having 10 phr more kraft lignin. By contrast, compound E compared to compound Ref. 4, in response to the addition of another 10 phr of kraft lignin, shows an indexed rigidity value that passes from 100 to 131.

From the data recorded in the three tables above and in relation to the experimental tests, it is clear that the addition of kraft lignin, under certain conditions, succeeds in imparting greater rigidity to the compound, without increasing the viscosity of the mixture itself.

The present invention would therefore make it possible to recover the loss in rigidity of the compound due to a reduction thereof, owing to an improvement in rolling resistance, without thereby encountering any worsening of other characteristics, such as viscosity.

Finally, in light of the fact that lignin is a natural product that comprises a by-product of wood, in the production of paper, and that the disposal of the lignin represents a limiting stage in the paper production chain, it is important to stress the importance of the present invention in terms of environmental sustainability.

## Claims

1. Rubber compound for a pneumatic tyre portion comprising a cross-linkable unsaturated chain polymeric base, a reinforcing filler, processing oil and vulcanization agents; said reinforcing filler comprising silica; said compound **being characterized in that** it comprises kraft lignin in a quantity of between 2 and 30 phr; the ratio in phr between said reinforcing filler and said processing oil being greater than or equal to 3.

2. Rubber compound according to claim 1, **characterized in that** the reinforcing filler comprises silica.

3. Rubber compound according to claim 1 or 2, **characterized in that** it comprises kraft lignin in a quantity of between 5 and 20 phr.

4. Rubber compound according to one of the preceding claims, **characterized in that** the ratio in phr between the reinforcing filler and the processing oil is greater than or equal to 10.

5. Rubber compound according to one of the preceding claims, **characterized in that** the lignin is added to the compound during a first mixing step together with the reinforcing filler.

6. Portion of a pneumatic tyre manufactured using the compound according to one of the preceding claims.

7. Portion of a pneumatic tyre according to claim 6, **characterized in that** it is a structural component within the group composed of TREAD UNDERLAYER, TREAD BASE, BEADFILLER, ABRASION GUM STRIP, RUN FLAT INSERT or SIDEWALL.

8. Pneumatic tyre comprising a portion according to claim 6 or 7.

## Patentansprüche

1. Gummimischung für einen Luftreifenabschnitt, umfassend eine vernetzbare, ungesättigte Kettenpolymerbasis, einen verstärkenden Füllstoff, Verarbeitungsöl und Vulkanisationsmittel; der verstärkende Füllstoff umfassend Kieselerde; wobei die Mischung **dadurch gekennzeichnet ist, dass** sie Kraft-Lignin in einer Menge zwischen 2 und 30 phr umfasst; wobei das Verhältnis zwischen dem verstärkenden Füllstoff und dem Verarbeitungsöl größer als oder gleich 3 ist.

2. Gummimischung nach Anspruch 1, **dadurch gekennzeichnet, dass** der verstärkende Füllstoff Kieselerde umfasst.

3. Gummimischung nach Anspruch 1 oder 2, **dadurch gekennzeichnet, dass** sie Kraft-Lignin in einer Menge zwischen 5 und 20 phr umfasst.

4. Gummimischung nach einem der vorstehenden Ansprüche,
**dadurch gekennzeichnet, dass** das Verhältnis in phr zwischen dem verstärkenden Füllstoff und dem Verarbeitungsöl größer als oder gleich 10 ist.

5. Gummimischung nach einem der vorstehenden Ansprüche,
**dadurch gekennzeichnet, dass** das Lignin der Mischung während eines ersten Mischungsschritts zusammen mit dem verstärkenden Füllstoff zugesetzt wird.

6. Abschnitt eines Luftreifens, der unter Verwendung der Mischung nach einem der vorstehenden Ansprüche gefertigt ist.

7. Abschnitt eines Luftreifens nach Anspruch 6, **dadurch gekennzeichnet, dass** es sich um eine strukturelle Komponente innerhalb der Gruppe handelt, die aus LAUFFLÄCHENUNTERSCHICHT, GRUNDLAUFFLÄCHE, KERNREITER, ABRIEBGUMMISTREIFEN, NOTLAUFEINSATZ oder SEITENWAND besteht.

8. Luftreifen, umfassend einen Abschnitt nach Anspruch 6 oder 7.

## Revendications

1. Composé de caoutchouc pour une partie de pneumatique comprenant une base polymère à chaîne insaturée réticulable, une charge renforçante, une huile de traitement et des agents de vulcanisation ; ladite charge renforçante comprenant de la silice ; ledit composé **étant caractérisé en ce qu'**il comprend de la thiolignine en une quantité entre 2 et 30 phr ; le rapport en phr entre ladite charge renforçante et ladite huile de traitement étant supérieur ou égal à 3.

2. Composé de caoutchouc selon la revendication 1, **caractérisé en ce que** la charge renforçante comprend de la silice.

3. Composé de caoutchouc selon la revendication 1 ou 2, **caractérisé en ce qu'**il comprend de la thiolignine en une quantité entre 5 et 20 phr.

4. Composé de caoutchouc selon l'une des revendications précédentes, **caractérisé en ce que** le rapport en phr entre la charge renforçante et l'huile de traitement est supérieur ou égal à 10.

5. Composé de caoutchouc selon l'une des revendications précédentes, **caractérisé en ce que** la lignine est ajoutée au composé lors d'une première étape de mélange conjointement avec la charge renforçante.

6. Portion d'un pneumatique fabriquée à l'aide du composé selon l'une des revendications précédentes.

7. Partie d'un pneumatique selon la revendication 6, **caractérisée en ce qu'**il s'agit d'un composant structurel dans le groupe composé de LA SOUS-COUCHE DE LA BANDE DE ROULEMENT, DE LA BASE DE LA BANDE DE ROULEMENT, DU BOURRAGE SUR TRINGLE, DE LA BANDELETTE DE GOMME DE LIAISON D'ABRASION, DE L'INSERT DE ROULAGE A PLAT OU DU FLANC.

8. Pneumatique comprenant une partie selon la revendication 6 ou 7.
